# FASCICULE DE BREVET EUROPEEN

(11) **EP 2 858 955 B1**
(45) Date de publication et mention de la délivrance du brevet: **10.08.2016**
(21) Numéro de dépôt: 13731406.8
(22) Date de dépôt: 11.06.2013
(51) Int. Cl.: C03B 5/04, C03B 5/235, C03B 5/44, F27B 3/00, C03B 5/26

(54) **INSTALLATION ET PROCEDE DE FUSION DE VERRE**
ANLAGE UND VERFAHREN ZUM SCHMELZEN VON GLAS
INSTALLATION AND METHOD FOR MELTING GLASS

(30) Priorité: 12.06.2012 FR 1255476
(43) Date de publication de la demande: 15.04.2015
(73) Titulaire: Saint-Gobain Isover, 92400 Courbevoie (FR)
(72) Inventeur: LEFRERE, Yannick, 60750 Choisy Au Bac (FR); LOPEPE, Frédéric, 93110 Rosny Sous Bois (FR); RAYER, Mathieu, 98200 Vienne (FR); VILLEROY DE GALHAU, Grégoire, 75016 Paris (FR)
(74) Mandataire: Pöpping, Barbara
(86) Numéro de dépôt international: PCT/FR2013/051353
(87) Numéro de publication internationale: WO 2013/186480

(56) Documents cités:
- EP-A1- 0 135 446
- EP-A1- 0 209 718
- EP-A2- 2 397 446
- FR-A1- 2 281 902
- FR-A1- 2 613 351
- DATABASE WPI Week 197648 5 mai 1976 (1976-05-05) Thomson Scientific, London, GB; AN 1976-89924X XP002692724, -& SU 501 258 A1 (AS UKR GAS INST) 5 mai 1976 (1976-05-05)

## Description

La présente invention concerne une installation de fusion de verre ou de roche, en particulier en vue de la fabrication de laines minérales, de préférence de laine de roche, comprenant une unité de fusion et une unité de chauffage rapide à haute température, ainsi qu'un procédé de fusion de verre ou de roche utilisant une telle installation.

La fusion de roche (basalte ou laitier de hauts fourneaux) nécessite généralement un chauffage des matières premières à des températures significativement plus élevées que la fusion de verre ordinaire. Elle est traditionnellement mise en oeuvre dans des fours de type cubilot, chauffés avec de grandes quantités de coke à des températures voisines de 1500 °C. Les fours à réfractaires, utilisés classiquement pour la fusion de verre, ne supportent en effet pas les températures élevées nécessaires à la fusion de la roche

La Demanderesse a récemment proposé, dans la demande française n° 1251170 déposée le 8 février 2012, publiée sous le numéro FR 2 986 605, un nouveau four permettant d'effectuer la fusion de roche à haute température (environ 1500 °C) dans un four à brûleurs immergés, alors que ce type de four avait été utilisé jusque là avant tout pour la fusion de verre. Ce nouveau four comporte des parois métalliques nues, c'est-à-dire non protégées par des matériaux réfractaires, qui sont parcourues par un système de conduites internes dans lesquelles on fait circuler un liquide de refroidissement, par exemple de l'eau. Dans un four de ce type, appelé ci-après four *waterjacket,* une couche solide de verre plus ou moins dévitrifié se forme à l'interface entre le bain de verre liquide et les parois refroidies et protège ces dernières contre l'usure et l'oxydation.

On comprend aisément que cette solution consistant à réaliser une fusion à haute température dans un four dont les parois sont non seulement dépourvues de revêtement réfractaire isolant mais sont activement refroidies, est extrêmement coûteuse en énergie.

Lorsqu'on utilise un tel four *waterjacket* pour à la fois faire fondre les matières vitrifiables et les porter jusqu'à la température nécessaire au filage de la laine de verre ou de roche, la consommation d'énergie est particulièrement importante car on maintient alors pendant une durée importante, sur une grande surface de contact, un différentiel de température élevé.

La présente invention se propose de modifier une installation de fusion de verre ou de roche telle que décrite dans la demande française n° 1251170, dans le but de réduire significativement la consommation d'énergie d'un procédé de fusion utilisant une telle installation. Bien que le bénéfice de la modification proposée, décrite en détail ci-après, soit particulièrement important pour une installation de fusion de roche à haute température utilisant un four à parois métalliques refroidies activement, ce bénéfice existe également, dans une moindre mesure, pour des installations à four classique en béton réfractaire ou pour des procédés de fusion de verre utilisant des températures moins élevées.

C'est pourquoi, bien que l'application de la présente invention à des procédés de fusion de roche dans des fours *waterjacket* corresponde à un mode de réalisation préféré, la présente invention n'est aucunement limitée à une telle application et peut être utilisée avec bénéfice pour des installations de fusion de verre de type différent et pour des procédés de fusion de verre ordinaire.

La demande EP 2 397 446 décrit un four de fusion de verre à brûleurs immergés, dont les parois comportent des panneaux avec des conduites internes pour la circulation de fluide de refroidissement.

La demande EP 0 135 446 décrit un dispositif de fusion de verre comportant une cuve de fusion avec des moyens de dispersion des matières premières dans le bain fondu, ainsi que des compartiments d'homogénéisation et d'affinage du verre.

L'idée à la base de la présente invention a été de dissocier l'étape de fusion des matières vitrifiables nécessitant des températures relativement peu élevées mais un temps assez long, de l'étape de chauffage à haute température de la matière fondue et de mettre en oeuvre ces deux étapes dans des unités ou cuves séparées. Au cours de la première étape (étape de fusion), mise en oeuvre de préférence dans un four *waterjacket,* la consommation d'énergie est ainsi avantageusement limitée grâce au fait que les matières premières sont portées à des températures relativement peu importantes mais suffisantes pour permettre la fusion des matières premières et l'obtention d'un liquide. La matière fondue à basse température est ensuite transférée dans une deuxième unité, appelée ci-après « unité de chauffage » ou « unité de chauffage rapide » ou « unité *flash* », où elle est chauffée par des brûleurs immergés dans un volume optimisé pour réduire le plus possible la surface et la durée de contact entre le verre très chaud et les parois refroidies de l'unité de chauffage.

La perte d'énergie thermique dans une telle unité de chauffage est essentiellement proportionnelle à la surface de contact entre le bain de matières fondues et les parois refroidies, et cette surface de contact dépend dans une très grande mesure de la hauteur du bain de matières fondues qu'il s'agit donc de réduire le plus possible. Dans une telle unité de chauffage à brûleurs immergés la réduction de la hauteur du bain est toutefois limitée par l'efficacité du transfert thermique entre le gaz de combustion chaud, produit par les brûleurs, et le bain de verre. En effet, lorsque le bain de matières fondues a une profondeur insuffisante, le gaz de combustion montant depuis les injecteurs des brûleurs immergés vers la surface du verre, ne peut pas transférer toute son énergie thermique au bain. Lorsque la température du gaz de combustion est supérieure à la température du bain au moment où les bulles de gaz atteignent la surface du verre, une partie de l'énergie thermique s'échappera avec les gaz de combustion ce qui est défavorable pour le bilan énergétique du procédé. Par conséquent, plus le transfert thermique entre le gaz de combustion et le bain de verre est rapide, plus la hauteur du bain peut être faible.

Afin de pouvoir utiliser un bain de verre à faible hauteur, l'efficacité du transfert thermique est optimisée dans la présente invention grâce à l'utilisation d'un grand nombre d'injecteurs de petite taille et de faible puissance dispensant de petites bulles de gaz de combustion. Il en découle une augmentation de la surface d'échange thermique entre le gaz de combustion et le bain et un ralentissement la montée des bulles de gaz dans le bain de verre visqueux.

Les trois éléments essentiels pour la présente invention sont donc
- la dissociation de la cuve de fusion et de la cuve de chauffage de l'installation,
- le dimensionnement de la cuve de fusion avec une faible hauteur de bain de verre, et
- l'utilisation d'une pluralité d'injecteurs de brûleurs immergés de faible puissance.

Plus particulièrement, la présente invention a pour objet une installation de fusion de verre ou de roche comprenant
- une première cuve, appelée cuve de fusion, avec une entrée de matières vitrifiables, des moyens de chauffage permettant de chauffer les matières vitrifiables jusqu'à obtention d'un verre liquide, une sortie de verre liquide et, en aval de la cuve de fusion,
- une deuxième cuve, appelée cuve de chauffage, avec des parois métalliques non recouvertes de matériaux isolants réfractaires et pourvues d'un système de conduites internes permettant la circulation d'un liquide de refroidissement, et une pluralité d'injecteurs de brûleurs immergés, la cuve de chauffage comportant une sortie de verre liquide, en forme de déversoir, qui limite la hauteur du bain de verre dans la cuve de chauffage à une valeur comprise entre 20 mm et 300 mm, de préférence entre 50 mm et 200 mm et en particulier entre 70 et 120 mm.

L'expression « verre liquide » telle qu'elle est utilisée dans la présente invention englobe à la fois le verre liquide obtenu par fusion de sable silicique mais également les verres liquides obtenus par fusion de roche, en particulier de roche basaltique et de laitiers de hauts fourneaux, ainsi que tous les mélanges de ces deux types de matières vitrifiables contenant éventuellement des matières vitrifiables de recyclage (calcin) et des adjuvants classiques tels que des fondants ou des agents d'affinage.

Le verre liquide obtenu en sortie de la cuve de fusion est suffisamment fluide pour pouvoir s'écouler depuis la cuve de fusion vers la cuve de chauffage rapide. Sa viscosité est de préférence comprise entre 3 et 100 poises. Le verre liquide peut contenir une certaine fraction d'infusibles qui est généralement inférieure à 5 %. La teneur globale en matières non fondues (fusibles et infusibles) du verre liquide obtenu en sortie de l'unité de fusion est inférieure à 10 % de préférence inférieure à 5 %.

La cuve de fusion et la cuve de chauffage rapide ont de préférence des contenances différentes, celle de la cuve de chauffage étant inférieure à la cuve de fusion. On entend par contenance des cuves le volume du bain de verre qu'elles contiennent lorsque l'installation fonctionne. Ce volume est égal au produit de la surface de la sole de la cuve par la hauteur du bain de verre, cette dernière étant imposée par la position de la sortie du verre liquide. La contenance des cuves de fusion et de chauffage rapide de l'installation de la présente invention peut donc être déterminée sur l'installation en cours de fonctionnement, mais également sur une installation vide. Le rapport de la contenance de la cuve de chauffage rapide à la contenance de la cuve de fusion est de préférence compris entre 1/1000 et 1/3, en particulier entre 1/100 et 1/10.

La sortie de verre liquide de la cuve de fusion est de préférence un déversoir permettant au verre liquide de s'écouler directement dans la cuve de chauffage, de préférence sans venir au contact avec d'autres éléments du four. La hauteur du déversoir de la cuve de fusion doit être suffisamment importante pour éviter tout risque de retour de verre chaud par projection. Le niveau du déversoir de la cuve de fusion (= niveau du bain de verre dans la cuve de fusion) est de préférence situé à au moins 500 mm, de préférence à au moins 1000 mm au dessus du niveau du déversoir de la cuve de chauffage (= niveau du bain de verre dans la cuve de chauffage).

La géométrie de la zone du déversoir peut avantageusement être configurée (hauteur et/ou orientation des parois) pour optimiser les écoulements de liquide et de gaz entre le déversoir et la chambre de chauffage.

Comme expliqué en introduction, pour pouvoir fonctionner avec une faible hauteur de bain de verre, la cuve de chauffage rapide doit comporter un grand nombre d'injecteurs fonctionnant à faible puissance et délivrant chacun des bulles de gaz de combustion de petite taille. Chaque injecteur peut être un brûleur immergé, ou bien un brûleur immergé peut comporter une pluralité d'injecteurs. Un brûleur immergé comportant un alignement d'une pluralité d'injecteurs individuels de faible puissance est décrit en détail dans la demande française n° 1251170 au nom de la Demanderesse.

La cuve de chauffage de l'installation de la présente invention comporte de préférence un nombre d'injecteurs de brûleurs immergés compris entre 50 et 300/m², de préférence entre 80 et 250/m² et en particulier entre 90 et 180 brûleurs par m² de sole. Ces injecteurs sont arrangés de préférence de manière régulière sur toute la sole de la cuve de chauffage. Lorsque la cuve de fusion comporte des brûleurs immergés comportant un alignement d'injecteurs, ces brûleurs sont disposés de préférence à égale distance les uns des autres et parallèlement les uns aux autres, en particulier perpendiculairement à la direction d'écoulement du verre.

La surface totale de la sole de la cuve de chauffage rapide est de préférence comprise entre 0,05 et 5 m², plus préférentiellement entre 0,1 et 3 m² et en particulier entre 0,2 et 2 m².

Le nombre total d'injecteurs de la cuve de chauffage est avantageusement compris entre 50 et 1000, de préférence entre 100 et 500.

Les brûleurs immergés de la cuve de chauffage sont alimentés de préférence par un mélange d'oxygène et de combustible gazeux, par exemple du méthane. L'utilisation d'un brûleur immergé pour la combustion d'un mélange air/gaz est en effet moins satisfaisante d'un point de vue de l'efficacité énergétique : l'efficacité de transfert énergétique d'une flamme air/gaz dans un bain de verre en fusion à 1500 °C est d'environ 27 % seulement tandis qu'elle est égale à environ 75 % pour une flamme O₂/gaz.

Cet avantage d'une meilleure efficacité énergétique s'accompagne toutefois d'une augmentation des problèmes d'oxydation des parois du four, ces problèmes étant d'autant plus importants que la teneur en oxygène du comburant et la température de la flamme sont élevées. Or, une flamme gaz/O₂ présente une température d'environ 3000 K, considérablement plus élevée que la température d'une flamme gaz/air qui est à seulement 2000 K environ.

Afin de protéger les parois métalliques nues de la cuve de chauffage rapide contre une dégradation oxydative, il est important de maintenir, sur ces parois, la couche de verre solidifié, mentionnée en introduction. Pour cela, on veillera avantageusement à ce que la distance entre les parois métalliques de la cuve de chauffage et l'injecteur le plus proche soit comprise entre 20 mm et 150 mm, de préférence entre 30 et 100 mm.

Bien que la hauteur du bain de verre liquide dans la cuve de chauffage soit un paramètre important pour agir sur les pertes d'énergie, ce n'est pas le seul paramètre à prendre en considération. En effet, pour une hauteur de bain de verre donnée, les pertes d'énergie au niveau de la cuve de chauffage seront d'autant plus faibles que le rapport longueur/largeur sera proche de 1. La sole de la cuve de chauffage de l'installation de la présente invention, lorsqu'elle est rectangulaire, a par conséquent un rapport longueur/largeur relativement peu important, de préférence compris entre 1 et 4, en particulier entre 1 et 3. On pourrait bien entendu également envisager des cuves avec des soles non rectangulaires. L'homme du métier n'aura pas de mal à dimensionner les cuves de manière à ce que le rapport périmètre/surface de la sole soit le plus faible possible.

La présente invention a également pour objet un procédé de fusion de verre ou de roche utilisant une installation selon l'invention. Ce procédé est un procédé continu et les étapes décrites ci-après doivent être comprises comme étant mises en oeuvre simultanément et en continu.

Plus particulièrement, le procédé de fusion de verre ou de roche de la présente invention, comprend
- l'alimentation de la cuve de fusion avec des matières vitrifiables solides,
- le chauffage desdites matières vitrifiables jusqu'à obtention d'un verre liquide ;
- le transfert du verre liquide obtenu depuis la cuve de fusion vers la cuve de chauffage ;
- le chauffage du verre liquide, dans la cuve de chauffage, au moyen des brûleurs immergés, depuis une température d'entrée (T₁) jusqu'à une température de sortie (T₂) supérieure d'au moins 50 °C à la température T₁, et
- le refroidissement des parois métalliques de la cuve de chauffage par circulation d'un liquide de refroidissement dans le système de conduites internes.

Comme mentionné en introduction, la cuve de chauffage peut être un four à réfractaires, utilisé classiquement pour la fusion de verre à partir de sable silicique et chauffé par exemple par des électrodes, des résistances, des bruleurs en voute, des brûleurs immergés. Dans un mode de réalisation préféré du procédé de la présente invention, la cuve de fusion, comme la cuve de chauffage, est une cuve à parois métalliques refroidies par un liquide de refroidissement et fonctionnant avec des brûleurs immergés.

La température du bain de verre en sortie de la cuve de fusion (T₁) est de préférence au plus égale à 1400 °C, en particulier au plus égale à 1350 °C, idéalement au plus égale à environ 1300 °C. Cette température dépend avant tout du comportement de fusion des matières vitrifiables et de leur viscosité à l'état fondu. Plus la température de fusion et la viscosité à l'état fondu des matières premières sont faibles, plus la température (T₁) à laquelle le verre liquide est transféré, depuis la cuve de fusion vers la cuve de chauffage rapide, peut être basse. Il est supposé ici, par approximation, que T₁ est la température du bain de verre en sortie de la cuve de fusion et la température du verre liquide à l'entrée de la cuve de chauffage où il est chauffé depuis T₁ jusqu'à T₂ supérieure d'au moins 50 °C à T₁. La différence entre T₂ et T₁ est de préférence comprise entre 50 et 300 °C, en particulier entre 100 et 300 °C, et idéalement entre 150 et 280 °C.

Les brûleurs immergés de la cuve de chauffage, généralement au nombre de 50 à 1000, délivrent une puissance par unité de surface de sole comprise entre 0,2 et 2 mégawatts/m² de sole de cuve, de préférence entre 0,3 et 1,8 mégawatts/m², chacun des injecteurs de brûleur immergé délivrant de préférence une puissance unitaire comprise entre 2 et 20 kW.

La taille de l'installation de fusion de verre de la présente invention n'est pas particulièrement limitée et l'installation peut fonctionner par exemple avec une tirée comprise entre 10 et 500 tonnes par 24 heures.

La cuve de chauffage de l'installation de la présente invention a généralement des dimensions inférieures à celles de la cuve de chauffage, et le verre séjourne ainsi avantageusement plus longtemps dans la cuve de fusion fonctionnant à température relativement plus basse, que dans la cuve de chauffage rapide où les pertes d'énergie dues à un différentiel de température entre parois et bain de verre sont particulièrement importantes. Autrement dit, la cuve de chauffage fonctionne avec une tirée spécifique, exprimée en tonnes par jour et par m² de sole de cuve, supérieure ou égale à la tirée spécifique de la cuve de fusion. Le rapport de la tirée spécifique de la cuve de chauffage à la tirée spécifique de la cuve de fusion est avantageusement compris entre 1 et 100, de préférence entre 2 et 30.

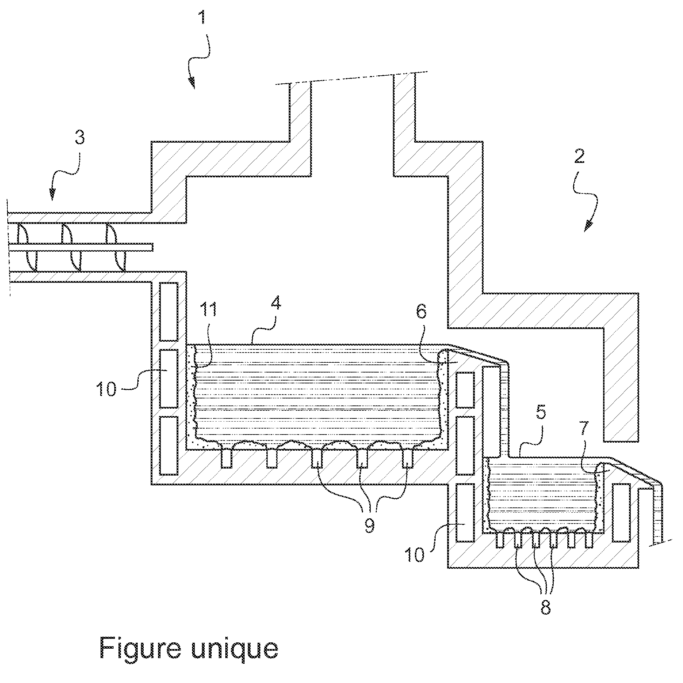

L'installation et le procédé de fusion de la présente invention sont illustrés à présent en référence à la figure unique annexée qui représente de façon schématique, en coupe transversale, une installation de fusion de verre selon l'invention en cours de fonctionnement.

Cette installation comporte une cuve de fusion 1 et une cuve de chauffage rapide 2, située en aval de la cuve de fusion. Les matières vitrifiables sont introduites dans la cuve de fusion 1 par une enfourneuse 3. La cuve de fusion 1 et la cuve de chauffage 2 comportent au niveau de leur sole des brûleurs immergés 8,9. Dans chacune des cuves 1,2 le niveau du bain de verre 4,5 est déterminé par la position d'un déversoir 6,7 par lequel s'écoule le verre liquide. Le verre liquide obtenu en sortie de la cuve de fusion 1 s'écoule par le déversoir 6 directement dans la cuve de fusion 2 ou il est chauffé de la température T₁ à la température T₂. Les deux cuves comportent des parois métalliques parcourues par un système de conduites internes 10 dans lesquelles circule un liquide de refroidissement. Le refroidissement actif des parois se traduit par la formation d'une couche de verre solidifié 11 qui isole les parois métalliques du bain de verre.

## Revendications

1. Installation de fusion de verre ou de roche comprenant
- une première cuve, appelée cuve de fusion (1), avec une entrée de matières vitrifiables, des moyens de chauffage permettant de chauffer les matières vitrifiables jusqu'à obtention d'un verre liquide, une sortie de verre liquide et, en aval de la cuve de fusion,
- une deuxième cuve, appelée cuve de chauffage (2), avec des parois métalliques non recouvertes de matériaux isolants réfractaires et pourvues d'un système de conduites internes (10) permettant la circulation d'un liquide de refroidissement, et une pluralité d'injecteurs de brûleurs immergés (8), la cuve de chauffage (2) comportant une sortie de verre liquide, en forme de déversoir (7), qui limite la hauteur du bain de verre dans la cuve de chauffage (2) à une valeur comprise entre 20 mm et 300 mm, de préférence entre 50 mm et 200 mm et en particulier entre 70 et 120 mm.

2. Installation selon la revendication 1, **caractérisée par le fait que** la contenance de la cuve de chauffage (2) est inférieure à celle de la cuve de fusion (1), le rapport de la contenance de la cuve de chauffage à la contenance de la cuve de fusion étant compris entre 1/1000 et 1/3.

3. Installation selon la revendication 1 ou 2, **caractérisée par le fait que** la sortie de verre liquide de la cuve de fusion est un déversoir (6) permettant au verre liquide de couler directement dans la cuve de chauffage (2).

4. Installation selon l'une quelconque des revendications précédentes, **caractérisée par le fait que** le nombre d'injecteurs de brûleurs immergés (8) de la cuve de chauffage (2) est compris entre 50 et 300/m², de préférence entre 80 et 250/m².

5. Installation selon l'une quelconque des revendications précédentes, **caractérisée par le fait que** la surface totale de la sole de la cuve de chauffage (2) est comprise entre 0,05 et 5 m², de préférence entre 0,1 et 3 m² et en particulier entre 0,2 et 2 m².

6. Installation selon l'une quelconque des revendications précédentes, **caractérisée par le fait que** le nombre total d'injecteurs de la cuve de chauffage (2) est compris entre 50 et 1000, de préférence entre 100 et 500.

7. Installation selon l'une quelconque des revendications précédentes, **caractérisée par le fait que** la distance entre les parois métalliques de la cuve de chauffage (2) et l'injecteur le plus proche est comprise entre 20 mm et 150 mm, de préférence entre 30 et 100 mm.

8. Installation selon l'une quelconque des revendications précédentes, **caractérisée par le fait que** la sole de la cuve de chauffage (2) a un rapport longueur/largeur compris entre 1 et 4, de préférence entre 1 et 3.

9. Procédé continu de fusion de verre ou de roche utilisant une installation de fusion selon l'une quelconque des revendications précédentes, comprenant
- l'alimentation de la cuve de fusion (1) avec des matières vitrifiables,
- le chauffage desdites matières vitrifiables jusqu'à obtention d'un verre liquide ;
- le transfert du verre liquide obtenu depuis la cuve de fusion (1) vers la cuve de chauffage (2) ;
- le chauffage du verre liquide, dans la cuve de chauffage (2), depuis une température d'entrée (T₁) jusqu'à une température de sortie (T₂) supérieure d'au moins 50 °C à la température T₁, au moyen des brûleurs immergés (8), et
- le refroidissement des parois métalliques de la cuve de chauffage (2) par circulation d'un liquide de refroidissement dans le système de conduites internes (10).

10. Procédé selon la revendication 9, **caractérisé par le fait que** les brûleurs immergés de la cuve de chauffage (2) délivrent une puissance surfacique comprise entre 0,2 et 2 mégawatts/m² de sole de cuve.

11. Procédé selon la revendication 9 ou 10, **caractérisé par le fait que** la différence entre T₂ et T₁ est comprise entre 50 et 300 °C, de préférence entre 100 et 300 °C, en particulier entre 150 et 280 °C.

12. Procédé selon l'une quelconque des revendications 9 à 11, **caractérisé par le fait que** chaque injecteur de brûleur immergé délivre une puissance comprise entre 2 et 20 kW.

13. Procédé selon l'une quelconque des revendications 9 à 12, **caractérisé par le fait que** les brûleurs immergés sont alimentés par un mélange d'oxygène et de combustible gazeux.

14. Procédé selon l'une quelconque des revendications 9 à 13, **caractérisé par le fait qu'**il fonctionne avec une tirée comprise entre 10 et 500 tonnes par 24 heures.

15. Procédé selon l'une quelconque des revendications 9 à 14, **caractérisé par le fait que** la cuve de chauffage fonctionne avec une tirée spécifique, exprimée en tonnes par jour et par m², supérieure ou égale à la tirée spécifique de la cuve de fusion, le rapport de la tirée spécifique de la cuve de chauffage à la tirée spécifique de la cuve de fusion étant compris entre 1 et 100, de préférence entre 2 et 30.

## Patentansprüche

1. Anlage zum Schmelzen von Glas oder Stein, aufweisend
- eine erste Wanne, bezeichnet als Schmelzwanne (1), mit einem Einlass für verglasende Rohstoffe, Heizmitteln die ein Aufheizen der verglasenden Rohstoffe bis zur Bildung eines flüssigen Glases ermöglichen, einen Auslass für flüssiges Glas, und hinter der Schmelzwanne,
- eine zweite Wanne, bezeichnet als Heizwanne (2), mit metallischen Wänden, welche nicht mit feuerfestem Isoliermaterial ausgekleidet sind und mit einem System von inneren Leitungen (10) für die Zirkulation einer Kühlflüssigkeit ausgerüstet sind, und mit einer Mehrzahl von Düsen von Tauchbrennern (8),
- wobei die Heizwanne (2) einen Auslass für flüssiges Glas in Form eines Überlaufs (7) aufweist, der die Höhe der Glasschmelze in der Heizwanne (2) auf einen Wert zwischen 20 mm und 300 mm, vorzugsweise zwischen 50 mm und 200 mm, besonders bevorzugt zwischen 70 mm und 120 mm begrenzt.

2. Anlage nach Anspruch 1, **dadurch gekennzeichnet, dass** das Fassungsvermögen der Heizwanne (2) geringer als das der Schmelzwanne (1) ist, wobei das Verhältnis des Fassungsvermögens der Heizwanne zu dem der Schmelzwanne zwischen 1/1000 und 1/3 beträgt.

3. Anlage nach Anspruch 1 oder 2, **dadurch gekennzeichnet, dass** der Auslass des flüssigen Glases der Schmelzwanne ein Überlauf (6) ist, von dem das flüssige Glas direkt in die Heizwanne (2) fließen kann.

4. Anlage nach einem der vorhergehenden Ansprüche, **dadurch gekennzeichnet, dass** die Anzahl der Düsen der Tauchbrenner (8) der Heizwanne (2) zwischen 50 und 300/m², bevorzugt zwischen 80 und 250/m² beträgt.

5. Anlage nach einem der vorhergehenden Ansprüche, **dadurch gekennzeichnet, dass** die Gesamtoberfläche der Sohle der Heizwanne (2) zwischen 0,05 und 5 m², bevorzugt zwischen 0,1 und 3 m², und besonders bevorzugt zwischen 0,2 und 2 m² beträgt.

6. Anlage nach einem der vorhergehenden Ansprüche, **dadurch gekennzeichnet, dass** die Gesamtzahl der Düsen der Heizwanne (2) zwischen 50 und 1000, bevorzugt zwischen 100 und 500 ist.

7. Anlage nach einem der vorhergehenden Ansprüche, **dadurch gekennzeichnet, dass** der Abstand zwischen den metallischen Wänden der Heizwanne (2) und der nächstgelegenen Düse zwischen 20 mm und 150 mm, vorzugsweise zwischen 30 und 100 mm beträgt.

8. Anlage nach einem der vorhergehenden Ansprüche, **dadurch gekennzeichnet, dass** die Sohle der Heizwanne (2) ein Länge/Breite-verhältnis zwischen 1 und 4, vorzugsweise zwischen 1 und 3 aufweist.

9. Verfahren zum kontinuierlichen Schmelzen von Glas oder Stein unter Verwendung einer Anlage zum Schmelzen nach einem der vorhergehenden Ansprüche, aufweisend
- die Versorgung der Schmelzwanne (1) mit verglasenden Rohstoffen,
- das Aufheizen der verglasenden Rohstoffe bis zum Erhalt eines flüssigen Glases,
- den Transport des flüssigen Glases von der Schmelzwanne (1) zur Heizwanne (2),
- das Heizen des flüssigen Glases in der Heizwanne (2) von einer Eintrittstemperatur (T₁) bis zu einer Austrittstemperatur (T₂), die mindestens 50° größer als die Temperatur T₁ ist, mittels Tauchbrennern (8) und
- das Kühlen der metallischen Wände der Heizwanne (2) mittels Zirkulation eines Kühlmittels in dem System innerer Leitungen (10).

10. Verfahren nach Anspruch 9, **dadurch gekennzeichnet, dass** die Tauchbrenner der Heizwanne (2) eine flächenbezogene Leistung zwischen 0,2 und 2 Megawatt/m² Sohle der Wanne liefern.

11. Verfahren nach Anspruch 9 oder 10, **dadurch gekennzeichnet, dass** die Differenz zwischen T₂ und T₁ zwischen 50 und 300°C, vorzugsweise zwischen 100 und 300°C, besonders bevorzugt zwischen 150 und 280°C ist.

12. Verfahren nach einem der Ansprüche 9 bis 11, **dadurch gekennzeichnet, dass** jede Düse eines Tauchbrenners eine Leistung zwischen 2 und 20 kW liefert.

13. Verfahren nach einem der Ansprüche 9 bis 12, **dadurch gekennzeichnet, dass** die Tauchbrenner mit einer Sauerstoff-Gasbrennstoff-Mischung versorgt werden.

14. Verfahren nach einem der Ansprüche 9 bis 13, **dadurch gekennzeichnet, dass** sein Durchsatz zwischen 10 und 500 Tonnen in 24 Stunden beträgt.

15. Verfahren nach einem der Ansprüche 9 bis 14, **dadurch gekennzeichnet, dass** der spezifische Durchsatz der Heizwanne (2), in Tonnen pro Tag und pro m² ausgedrückt, größer oder gleich dem spezifischen Durchsatz der Schmelzwanne (1) ist, wobei das Verhältnis des spezifischen Durchsatzes der Schmelzwanne und der Heizwanne zwischen 1 und 100, bevorzugt zwischen 2 und 30 beträgt.

## Claims

1. A plant for melting glass or rock comprising:
- a first tank, referred to as a melting tank (1), with a batch material inlet, heating means that make it possible to heat the batch materials until a liquid glass is obtained, a liquid glass outlet and, downstream of the melting tank,
- a second tank, referred to as a heating tank (1), with metallic walls that are not covered with refractory insulating materials and that are provided with a system of internal ducts allowing the circulation of a coolant, and a plurality of injectors of submerged burners (8), the heating tank (2) comprising a liquid glass outlet, in the form of an overflow (7), which limits the height of the glass bath in the heating tank (2) to a value between 20 mm and 300 mm, preferably between 50 mm and 200 mm and in particular between 70 and 120 mm.

2. The plant as claimed in claim 1, **characterized in that** the capacity of the heating tank (2) is less than that of the melting tank (1), the ratio of the capacity of the heating tank to the capacity of the melting tank being between 1/1000 and 1/3.

3. The plant as claimed in claim 1 or 2, **characterized in that** the liquid glass outlet of the melting tank is an overflow (6) allowing the liquid glass to flow directly into the heating tank (2).

4. The plant as claimed in any one of the preceding claims, **characterized in that** the number of injectors of submerged burners (8) of the heating tank is between 50 and 300/m², preferably between 80 and 250/m².

5. The plant as claimed in any one of the preceding claims, **characterized in that** the total surface area of the bottom of the heating tank (2) is between 0.05 and 5 m², preferably between 0.1 and 3 m² and in particular between 0.2 and 2 m².

6. The plant as claimed in any one of the preceding claims, **characterized in that** the total number of injectors of the heating tank (2) is between 50 and 1000, preferably between 100 and 500.

7. The plant as claimed in any one of the preceding claims, **characterized in that** the distance between the metallic walls of the heating tank (2) and the closest injector is between 20 mm and 150 mm, preferably between 30 and 100 mm.

8. The plant as claimed in any one of the preceding claims, **characterized in that** the bottom of the heating tank (2) has a length/width ratio between 1 and 4, preferably between 1 and 3.

9. A continuous process for melting glass or rock using a melting plant as claimed in any one of the preceding claims, comprising:
- supplying the melting tank (1) with batch materials;
- heating said batch materials until a liquid glass is obtained;
- transferring the liquid glass obtained from the melting tank (1) to the heating tank (2);
- heating the liquid glass, in the heating tank (2), from an inlet temperature (T₁) to an outlet temperature (T₂) at least 50°C above the temperature T₁, by means of the submerged burners (8); and
- cooling the metallic walls of the heating tank (2) by circulation of a coolant in the system of internal ducts (10).

10. The process as claimed in claim 9, **characterized in that** the submerged burners of the heating tank (2) deliver a surface power density of between 0.2 and 2 megawatts/m² of tank bottom.

11. The process as claimed in claim 9 or 10, **characterized in that** the difference between T₂ and T₁ is between 50°C and 300°C, preferably between 100°C and 300°C, in particular between 150°C and 280°C.

12. The process as claimed in any one of claims 9 to 11, **characterized in that** each submerged burner injector delivers a power of between 2 and 20 kW.

13. The process as claimed in any one of claims 9 to 12, **characterized in that** the submerged burners are fed with a mixture of oxygen and gaseous fuel.

14. The process as claimed in any one of claims 9 to 13, **characterized in that** it operates with an output between 10 and 500 tons per 24 hours.

15. The process as claimed in any one of claims 9 to 14, **characterized in that** the heating tank (2) operates with a specific output, expressed in tons per day and per m², of greater than or equal to the specific output of the melting tank (1), the ratio of the specific output of the heating tank to the specific output of the melting tank being between 1 and 100, preferably between 2 and 30.
